# FASCICULE DE BREVET EUROPEEN

(11) **EP 1 186 152 B1**
(45) Date de publication et mention de la délivrance du brevet: **01.03.2006**
(21) Numéro de dépôt: 00951578.4
(22) Date de dépôt: 09.06.2000
(51) Int. Cl.: H04M 3/44

(54) **SYSTEM ET PROCEDE DE TRAITEMENT D'APPELS TELEPHONIQUES**
SYSTEM UND VERFAHREN ZUR BEARBEITUNG VON FERNSPRECHANRUFEN
SYSTEM AND METHOD FOR PROCESSING TELEPHONE CALLS

(30) Priorité: 11.06.1999 FR 9907444
(43) Date de publication de la demande: 13.03.2002
(73) Titulaire: FRANCE TELECOM, 75015 Paris (FR)
(72) Inventeur: FORESTIER, Jacky, F-94320 Thiais (FR)
(74) Mandataire: Ballot, Paul Denis Jacques
(86) Numéro de dépôt international: PCT/FR2000/001619
(87) Numéro de publication internationale: WO 2000/078021

(56) Documents cités:
- EP-A- 0 782 309
- EP-A- 0 866 595
- DE-U- 29 722 222
- US-A- 4 993 068
- US-A- 5 325 421
- US-A- 5 594 784

## Description

L'invention concerne un procédé de traitement d'appels téléphoniques et une interface téléphonique pour la mise en oeuvre du procédé. Elle concerne également un terminal de télécommunications et un système téléphonique.

Plus précisément, l'invention concerne, selon un premier de ses aspects, un procédé de traitement d'appels téléphoniques entre appelants et appelés, selon lequel l'établissemerit d'une communication téléphonique comprend pour un appelant la prise de ligne, puis un énoncé vocal permettant l'identification de l'appelé et une identification de l'appelant à partir d'au moins une donnée biométrique dudit appelant.

Jusqu' à aujourd' hui, l'établissement d' un appel téléphonique a été entièrement basé sur une numérotation téléphonique définie par l'opérateur téléphonique et le lieu géographique pour les téléphones fixes ou selon l'opérateur pour les mobiles. La tarification des appels se fait notamment selon les paramètres origine/destination.

Ainsi un abonné est identifié par un numéro d'appel pour son téléphone fixe et par un autre numéro d'appel s'il a en outre un téléphone mobile.

La gestion des plans de numérotation est lourde et source d'erreur. L'apparition de nouveaux opérateurs va compliquer encore plus la numérotation des clients utilisateurs notamment pour les entreprises.

Des procédés ou systèmes visant à automatiser l'identification des personnes et/ou à simplifier les procédures d'appels téléphoniques sont par exemple connus des documents de brevets EP 0 866 595, EP 0 782 309, DE 297 22 222, et US 4 993 068.

L'invention a néanmoins pour but de simplifier encore les procédés de traitement d'appels téléphoniques, et ceci en renonçant notamment à la numérotation classique pour identifier les destinataires de ces appels.

A cette fin le procédé de l'invention, par ailleurs conforme à la définition générique qu'en donne le préambule ci-dessus, est essentiellement caractérisé en ce qu'il comporte une vérification de cette identification à partir d'au moins une autre donnée biométrique, l'une des données étant l'empreinte vocale, et en ce que l'identification est sécurisée, la sécurité étant apportée par une vérification de l'empreinte vocale au cours des communications.

Selon une caractéristique, l'identification de l'appelant est réalisée à partir de son empreinte vocale.

Selon une autre caractéristique, une deuxième donnée biométrique de l'appelant correspond à son empreinte digitale.

Selon une autre caractéristique, l'identification comprend une authentification de la ou des données biométriques.

L'authentification de la ou des données biomètriques comprend une vérification de la correspondance entre les caractéristiques d'un appelant et les caractéristiques préalablement enregistrées pour ledit appelant.

L'enregistrement préalable de l'empreinte vocale comprend un apprentissage.

Pour renforcer la sécurité, des vérifications sont effectuées aléatoirement en cours de communication.

On peut prévoir également de renforcer la sécurité par la demande d'un code confidentiel attribué au préalable et vérification de ce code, dans le cas d'une non concordance d'au moins une caractéristique.

Selon une autre caractéristique, l'énoncé vocal comprend une caractéristique propre de l'appelé.

Avantageusement, la caractéristique propre de l'appelé est son nom patronymique.

Selon une autre caractéristique, l'énoncé vocal comprend une caractéristique propre de l'individu appelant.

Avantageusement, la caractéristique propre de l'individu appelant est le nom patronymique de l'individu.

L'invention concerne également une interface téléphonique comportant un module de lancement d'appel téléphonique et d'identification des appelés à partir d'un énoncé vocal d'un appelant et un module de traitement de données biométriques d'appelants permettant l'identification desdits appelants à partir d'une donnée biométrique, et l'établissement des communications, caractérisée en ce qu'elle comprend des moyens de vérification de l'identification à partir d'une deuxième donnée biométrique, l'une des données étant l'empreinte vocale, et en ce que ces moyens sont aptes à vérifier l'empreinte vocale en cours de communication.

Selon une autre caractéristique, le module de traitement de données biomètriques des appelants comporte au moins une unité U_{yo} de traitement des appels téléphoniques comprenant des moyens de reconnaissance vocale RV, et une base de données BD sur laquelle sont enregistrées des données caractéristiques des personnes susceptibles d'appeler ou d'être appelées, lesdites données contenant au moins une première donnée biométrique permettant l'identification dudit appelant et au moins une deuxième donnée biométrique pour la vérification de cette identification, l'établissement des communications téléphoniques entre un appelant et un appelé se faisant à partir de l'énoncé vocal émis par l'appelant, son identification, et l'identification de l'appelé.

Selon une autre caractéristique, les moyens pour sécuriser l'identification réalisent des vérifications aléatoires en cours de communication.

Avantageusement, les moyens pour sécuriser l'identification comportent des moyens pour demander un code confidentiel attribué au préalable à un appelant et pour comparer le code reçu et le code préalablement enregistré pour ledit appelant, dans le cas d'une non-concordance d'au moins une caractéristique.

L'invention concerne également un terminal de télécommunications principalement caractérisé en ce qu'il comporte des moyens de lecture et de transmission d'une empreinte digitale d'un utilisateur tel qu'un appelant, et des moyens pour transmettre un énoncé vocal de l'utilisateur exploité en tant qu'empreinte vocale de cet utilisateur.

L'invention concerne également un système téléphonique comprenant au moins un autocommutateur pour piloter les appels entre les terminaux téléphoniques, principalement caractérisé en ce qu'il comprend au moins une unité U_{yo} de traitement des appels téléphoniques comprenant des moyens de reconnaissance vocale RV, et une base de données BD sur laquelle sont enregistrées des données caractéristiques des personnes susceptibles d'appeler ou d'être appelées, lesdites données contenant au moins une première donnée biométrique permettant l'identification dudit appelant et au moins une deuxième donnée biométrique pour la vérification de cette identification, l'établissement des communications téléphoniques entre un appelant et un appelé se faisant à partir de l'énoncé vocal émis par l'appelant, son identification, et l'identification de l'appelé, et en ce que l'identification de l'appelant est sécurisée par une vérification de l'empreinte vocale en cours de communication.

D'autres particularités et avantages de l'invention apparaîtront clairement à la lecture de la description qui est faite ci-après et qui est donnée à titre d'exemple non limitatif et en regard des dessins sur lesquels :
- la figure 1 représente le schéma d'un système téléphonique selon l'invention,
- la figure 2, représente le schéma détaillé d'une interface entre appelant et réseau selon l'invention.
La description qui va suivre est faite dans le cas de l'exemple d'un réseau d'entreprise Y multi-sites. L'interface I comporte à titre d'exemple dans ce cas deux unités (ou modules) chacune étant placée respectivement dans chacun des sites d'une entreprise. Elle peut comporter également une ou plusieurs unités (ou modules) à l'extérieur du réseau privé reliées à un ou plusieurs autocommutateur du réseau public.

Dans cet exemple, un premier autocommutateur privé PABX-D gère les appels entrant et sortant d'un site O et un deuxième autocommutateur privé PABX-D gère les appels entrant et sortant d'un deuxième site D.

Une unité U_{YO} de traitement des appels de l'entreprise Y est apte à recevoir un appel d'une personne A du site O désirant communiquer avec une personne B du site D.

De la même façon une unité U_{YD} de traitement des appels est apte à recevoir un appel d'une personne D du site D désirant communiquer avec une personne C du site O.

A cet effet, chaque unité U_{YO} et U_{YD} est apte à identifier l'appelant et l'appelé.

On va décrire dans la suite le traitement pour des appels provenant du site O sachant qu'il est similaire dans le cas d'appels provenant du site D, à ceci près que ces appels seront traités par l'unité U_{YD} au lieu de l'unité U_{YO}.

L'appelant est identifié et plus précisément authentifié par une analyse de caractéristiques qui lui sont propres notamment biométriques :
- empreinte vocale
- nom (patronymique)
- empreinte digitale, dans ce cas, l'image de l'empreinte sera par exemple mémorisée sur un support à mémorisation du type carte à puce, que l'appelant introduira dans son téléphone ou obtenue directement par un périphérique du terminal de télécommunications TA, TB (la souris). Les terminaux de télécommunications utilisés seront équipés de moyens aptes à acquérir une empreinte digitale ou à lire l'information correspondante.

Ainsi chaque employé de la société Y aura un « profil » enregistré dans l'unité U_{YO}.

Le profil correspond à l'ensemble des caractéristiques propres à chaque employé.

L'appelé est identifié par un code. De préférence le code sera son nom (patronymique).

L'unité U_{YO} comporte en mémoire le code de l'ensemble des personnes susceptibles d'utiliser le système téléphonique de l'entreprise Y.

Lorsque l'appelant A a été authentifié et que l'appelé a été identifié, l'unité U_{YO} transmet le message de l'appelant à l'autocommutateur PABX-D.

Les autocommutateurs auront au préalable en mémoire un numéro correspondant à chaque personne susceptible de passer des appels. Ces numéros auront été transmis et mémorisés par l'unité U_{YO}.

Lorsque l'unité U_{YO} a procédé à l'authentification de l'appelant A, elle communique le numéro affecté à cet appelant et celui qui est affecté à l'appelé pour établir la communication.

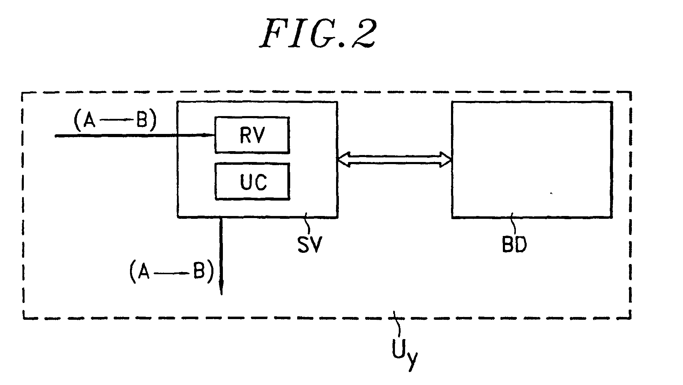

L'unité de traitement U_{YO} est représentée de façon détaillée sur la figure 2.

Cette unité U_{YO} comporte une base de données BD dans laquelle sont enregistrées les caractéristiques de toutes les personnes susceptibles d'utiliser le système.

L'unité comporte également un système de vérification SV comprenant une unité de reconnaissance vocale RV et une unité de calcul UC capable d'effectuer les traitements nécessaires dans le cas de la vérification d'empreinte digitale et/ou de comparaison de codes secrets.

Un code secret attribué au préalable à toute communication à chaque utilisateur, pourra en effet être demandé par le système au cas où une des trois caractéristiques n'est pas reconnue (rejetée) par le système de vérification SV.

Bien entendu, l'unité de reconnaissance vocale RV suit le principe habituel à savoir :
- l'apprentissage,
- la vérification,
- l'adaptation au modèle

Afin de sécuriser le système, il est prévu que l'unité U_{YO} effectue les opérations suivantes :
- une vérification de l'empreinte vocale au début de la communication et aléatoirement en cours de communication ;

on peut prévoir à cet effet que le programme de commande de vérification exécuté par l'unité de vérification RV intègre une commande aléatoire ;
- la demande d'émission du code secret par l'appelant. Ce code peut correspondre à une séquence DTMF (entrée sur le clavier du téléphone). Le code permet d'identifier l'appelant et de l'authentifier en cas d'échec à l'issue de la vérification de l'une des caractéristiques de l'appelant (empreinte vocale, son nom, son empreinte digitale).

Ainsi le système qui vient d'être décrit permet de réaliser des appels téléphoniques sans numérotation par l'appelant, du numéro de l'appelé.

Une double authentification des appelants par authentification vocale et contrôle du nom avec contrôle de l'empreinte digitale ce qui permet de sécuriser le système et d'appliquer la tarification à l'appelant sans risque d'erreur.

Les individus appelants/appelés n'ont plus de numéro de téléphone, ils sont identifiés en tant qu'individus uniques par au moins une caractéristique « humaine » propre à l'individu. Un individu peut donc téléphoner depuis n'importe quel téléphone (extérieur au système) dès lors qu'il est identifié auprès du système. Il sera facturé suivant son profil, ce qui est particulièrement intéressant pour les nomades d'entreprise en déplacement chez un client.

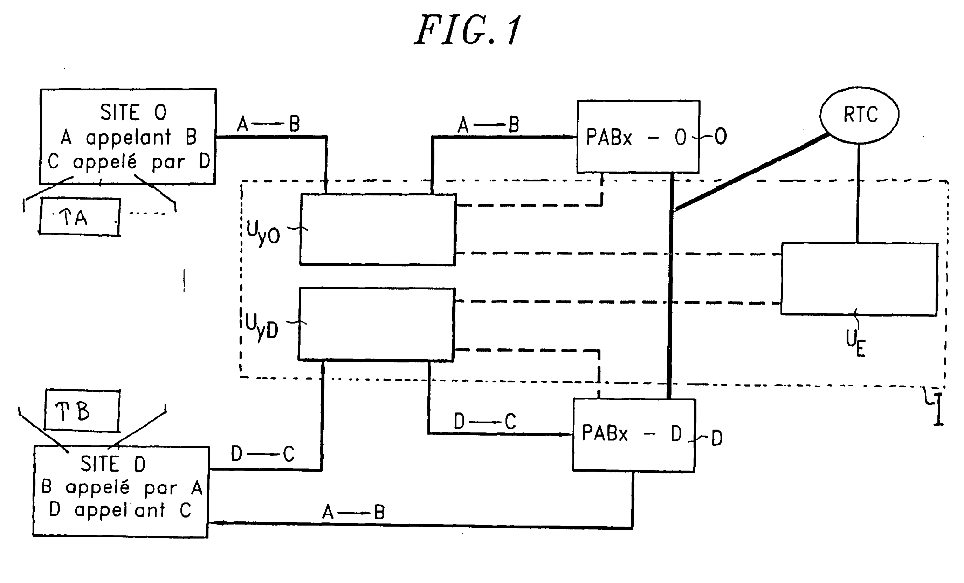

Il peut être prévu, comme l'illustre également le schéma de la figure 1, une ou plusieurs unités de traitement U_{E} à l'extérieur du réseau privé d'entreprise, en relation avec un ou plusieurs autocommutateurs du réseau commuté public RTC de manière à élargir le système qui vient d'être décrit, au réseau public. Dans ce cas les unités U_{E} reliées à différents autocommutateurs comprendraient une base de donnée regroupant les caractéristiques propres de personnes désirant bénéficier du système qui vient d'être décrit.

Dans tous les cas l'unité U_{E} est apte à traiter les appels des personnes se déplaçant sur plusieurs sites du réseau privé d'entreprise Y.

L'interface qui vient d'être décrite est indépendante des terminaux de télécommunications et des réseaux qu'il s'agisse du réseau RTC, RNIS ou Internet.

En outre une vérification initiale basée sur l'empreinte digitale, puis une double authentification grâce à un nom « sésame » à la quelle on rajoute une vérification vocale permet de sécuriser l'identification de l'appelant. Le fait de vérifier l'empreinte vocale pendant la communication renforce cette sécurité.

## Revendications

1. Procédé de traitement d'appels téléphoniques entre appelants et appelés, selon lequel, l'établissement d'une communication téléphonique comprend pour un appelant la prise de ligne, puis un énoncé vocal permettant l'identification de l'appelé et une identification de l'appelant à partir d'au moins une donnée biométrique dudit appelant, **caractérisé en ce qu'**il comporte une vérification de cette identification à partir d'au moins une autre donnée biométrique, l'une des données étant l'empreinte vocale, et **en ce que** l'identification est sécurisée, la sécurité étant apportée par une vérification de l'empreinte vocale au cours des communications.

2. Procédé de traitement d'appels téléphoniques selon la revendication 1, **caractérisé en ce que** l'identification de l'appelant est réalisée à partir de son empreinte vocale.

3. Procédé de traitement d'appels téléphoniques selon la revendication 1 ou 2, **caractérisé en ce qu'**une deuxième donnée biométrique de l'appelant correspond à son empreinte digitale.

4. Procédé de traitement d'appels téléphoniques selon l'une quelconque des revendications précédentes, **caractérisé en ce que** l'identification comprend une authentification de la ou des données biométriques.

5. Procédé de traitement d'appels téléphoniques selon la revendication 4, **caractérisé en ce que** l'authentification de la ou des données biométriques comprend une vérification de la correspondance entre les caractéristiques d'un appelant et les caractéristiques préalablement enregistrées pour ledit appelant.

6. Procédé de traitement d'appels téléphoniques selon les revendications 4 ou 5, **caractérisé en ce que** l'enregistrement préalable de l'empreinte vocale comprend un apprentissage.

7. Procédé de traitement d'appels téléphoniques selon la revendication 1, **caractérisé en ce que** des vérifications sont effectuées aléatoirement en cours de communication.

8. Procédé de traitement d'appels téléphoniques selon la revendication 1, **caractérisé en ce que** la sécurité comporte en outre la requête d'un code confidentiel attribué au préalable et vérification de ce code, dans le cas d'une non-concordance d'au moins une caractéristique.

9. Procédé de traitement d'appels téléphoniques selon l'une quelconque des revendications précédentes, **caractérisé en ce que** l'énoncé vocal comprend une caractéristique propre de l'appelé.

10. Procédé de traitement d'appels téléphoniques selon la revendication 9, **caractérisé en ce que** la caractéristique propre de l'appelé est son nom patronymique.

11. Procédé de traitement d'appels téléphoniques selon l'une quelconque des revendications précédentes, **caractérisé en ce que** l'énoncé vocal comprend une caractéristique propre de l'individu appelant.

12. Procédé de traitement d'appels téléphoniques selon la revendication 11, **caractérisé en ce que** la caractéristique propre de l'individu appelant est le nom patronymique de l'individu.

13. Interface téléphonique (I) entre appelant et réseau téléphonique (RTC) comportant un module (PABX-O) de lancement d'appel téléphonique et d'identification des appelés à partir d'un énoncé vocal d'un appelant et un module de traitement (U_{yo}) de données biométriques d'appelants permettant l'identification desdits appelants à partir d'une donnée biométrique, et l'établissement des communications, **caractérisée en ce qu'**elle comprend des moyens de vérification (SV) de l'identification à partir d'une deuxième donnée biométrique, l'une des données étant l'empreinte vocale, et **en ce que** ces moyens (SV) sont aptes à vérifier l'empreinte vocale en cours de communication.

14. Interface selon la revendication 13, **caractérisée en ce que** le module (U_{yo}) de traitement de données biométriques des appelants comporte au moins une unité (U_{yo}) de traitement des appels téléphoniques comprenant des moyens de reconnaissance vocale (RV), et une base de données (BD) sur laquelle sont enregistrées des données caractéristiques des personnes susceptibles d'appeler ou d'être appelées, lesdites données contenant au moins une première donnée biométrique permettant l'identification dudit appelant et au moins une deuxième donnée biométrique pour la vérification de cette identification, l'établissement des communications téléphoniques entre un appelant et un appelé se faisant à partir de l'énoncé vocal émis par l'appelant, son identification, et l'identification de l'appelé.

15. Interface selon la revendication 13, **caractérisée en ce que** les moyens (SV) pour sécuriser l'identification réalisent des vérifications aléatoires en cours de communication.

16. Interface selon la revendication 13, **caractérisée en ce que** les moyens (SV) pour sécuriser l'identification comportent des moyens pour demander un code confidentiel attribué au préalable à un appelant et pour comparer le code reçu et le code préalablement enregistré pour ledit appelant, dans le cas d'une non-concordance d'au moins une caractéristique.

17. Terminal de télécommunications (TA) comportant des moyens pour la mise en oeuvre de toutes les étapes du procédé selon l'une quelconque des revendications 1 à 12, **caractérisé en ce qu'**il comporte des moyens de lecture et de transmission d'une empreinte digitale d'un utilisateur tel qu'un appelant, et des moyens (TA) pour transmettre un énoncé vocal de l'utilisateur, exploité en tant qu'empreinte vocale (RV, SV) de cet utilisateur.

18. Système téléphonique comprenant au moins un autocommutateur (PABX-0) pour piloter les appels entre les terminaux téléphoniques (TA, TB), **caractérisé en ce qu'**il comprend au moins une unité (U_{yo}) de traitement des appels téléphoniques comprenant des moyens de reconnaissance vocale (RV), et une base de données (BD) sur laquelle sont enregistrées des données caractéristiques des personnes susceptibles d'appeler ou d'être appelées, lesdites données contenant au moins une première donnée biométrique permettant l'identification dudit appelant et au moins une deuxième donnée biométrique pour la vérification de cette identification, l'une des données étant une empreinte vocale de l'appelant, l'établissement des communications téléphoniques entre un appelant et un appelé se faisant à partir de l'énoncé vocal émis par l'appelant, son identification, et l'identification de l'appelé et **en ce que** l'identification de l'appelant est sécurisée par une vérification (SV) de l'empreinte vocale en cours de communication.

## Patentansprüche

1. Verfahren zur Bearbeitung von Telefonanrufen zwischen Anrufern und Angerufenen, wonach die Herstellung eines Telefongesprächs für einen Anrufer die Leitungsaufnahme, dann eine Stimmansage, die die Identifizierung des Angerufenen erlaubt, und eine Identifizierung des Anrufers anhand zumindest einer biometrischen Datenangabe des Anrufers umfasst, **dadurch gekennzeichnet, dass** es eine Überprüfung dieser Identifizierung anhand von zumindest einer anderen biometrischen Datenangabe aufweist, wobei eine dieser Daten das Stimmbild ist, und dass die Identifizierung gesichert ist, wobei die Sicherheit durch eine Überprüfung des Stimmbilds im Verlauf des Gesprächs hergestellt wird.

2. Verfahren zur Bearbeitung von Telefonanrufen gemäß Anspruch 1, **dadurch gekennzeichnet, dass** die Identifizierung des Anrufers anhand seines Stimmbildes durchgeführt wird.

3. Verfahren zur Bearbeitung von Telefonanrufen gemäß Anspruch 1 oder 2, **dadurch gekennzeichnet, dass** eine zweite biometrische Datenangabe des Anrufers seinem digitalen Stimmbild entspricht.

4. Verfahren zur Bearbeitung von Telefonanrufen gemäß irgendeinem der vorherigen Ansprüche, **dadurch gekennzeichnet, dass** die Identifizierung eine Authentifizierung der biometrischen Datenangabe(n) umfasst.

5. Verfahren zur Bearbeitung von Telefonanrufen gemäß Anspruch 4, **dadurch gekennzeichnet, dass** die Authentifizierung der biometrischen Datenangabe(n) eine Überprüfung der Übereinstimmung zwischen den Eigenschaften eines Anrufers und den zuvor für den Anrufer aufgezeichneten Eigenschaften umfasst.

6. Verfahren zur Bearbeitung von Telefonanrufen gemäß den Ansprüchen 4 oder 5, **dadurch gekennzeichnet, dass** die vorherige Aufzeichnung des Stimmbildes eine Übungsphase umfasst.

7. Verfahren zur Bearbeitung von Telefonanrufen gemäß Anspruch 1, **dadurch gekennzeichnet, dass** Überprüfungen zufallsbedingt im Verlauf des Gesprächs durchgeführt werden.

8. Verfahren zur Bearbeitung von Telefonanrufen gemäß Anspruch 1, **dadurch gekennzeichnet, dass** die Sicherheit außerdem das Nachsuchen um einen vorab zugeteilten vertraulichen Code und eine Überprüfung dieses Codes in dem Fall einer Nicht-Übereinstimmung zumindest einer Eigenschaft umfasst.

9. Verfahren zur Bearbeitung von Telefonanrufen gemäß irgendeinem der vorherigen Ansprüche, **dadurch gekennzeichnet, dass** die Stimmansage eine Eigenschaft aufweist, die dem Angerufenen zueigen ist.

10. Verfahren zur Bearbeitung von Telefonanrufen gemäß Anspruch 9, **dadurch gekennzeichnet, dass** die Eigenschaft, die dem Angerufenen zueigen ist, sein Familienname ist.

11. Verfahren zur Bearbeitung von Telefonanrufen gemäß irgendeinem der vorherigen Ansprüche, **dadurch gekennzeichnet, dass** die Stimmansage eine Eigenschaft umfasst, die der anrufenden Person zueigen ist.

12. Verfahren zur Bearbeitung von Telefonanrufen gemäß Anspruch 11, **dadurch gekennzeichnet, dass** die Eigenschaft, die der anrufenden Person zueigen ist, der Familienname der Person ist.

13. Telefonschnittstelle (I) zwischen einem Anrufer und einem Telefonnetz (RTC) mit einem Modul (PABX-O) zur Freigabe von Telefonanrufen und zur Identifizierung der Angerufenen anhand einer Stimmansage eines Anrufers und mit einem Modul zur Verarbeitung (U_{YO}) von biometrischen Daten von Anrufern, welche die Identifizierung der Anrufer anhand einer biometrischen Datenangabe erlauben, und zur Herstellung von Gesprächen, **dadurch gekennzeichnet, dass** sie Vorrichtungen zur Verifikation (SV) der Identifizierung anhand einer zweiten biometrischen Datenangabe aufweist, wobei eine der Datenangeben das Stimmbild ist, und dass diese Vorrichtungen (SV) geeignet sind, das Stimmbild im Verlauf des Gesprächs zu überprüfen.

14. Schnittselle gemäß Anspruch 13, **dadurch gekennzeichnet, dass** das Modul (U_{YO}) zur Verarbeitung biometrischer Daten von Anrufern zumindest eine Einheit (U_{yo}) zur Verarbeitung von Telefonanrufen mit Vorrichtungen zur Stimmerkennung (RV) und eine Datenbasis (BD) aufweist, auf welcher Daten aufgezeichnet sind, die charakteristisch sind für Personen, die anrufen oder angerufen werden können, wobei die Daten zumindest eine erste biometrische Datenangabe enthalten, welche die Identifizierung des Anrufers ermöglicht, und zumindest eine zweite biometrische Datenangabe zur Überprüfung dieser Identifizierung, wobei die Herstellung der Telefongespräche zwischen einem Anrufer und einem Angerufenen anhand der von dem Anrufer gemachten Stimmansage, seiner Identifizierung und der Identifizierung des Angerufenen geschieht.

15. Schnittstelle gemäß Anspruch 13, **dadurch gekennzeichnet, dass** die Vorrichtungen (SV) zur Sicherung der Identifizierung zufällige Überprüfungen im Verlauf des Gesprächs durchführen.

16. Schnittstelle gemäß Anspruch 13, **dadurch gekennzeichnet, dass** die Vorrichtungen (SV) zur Sicherung der Identifizierung Einrichtungen aufweisen zum Abfragen eines vertraulichen Codes, der einem Anrufer zuvor zugeteilt worden ist, und zum Vergleichen des empfangenen Codes und des zuvor für den Anrufer aufgezeichneten Codes, in dem Fall, wo nicht zumindest eine Eigenschaft übereinstimmt.

17. Telekommunikationsterminal (TA) mit Vorrichtungen zur Durchführung aller Schritte des Verfahrens gemäß irgendeinem der Ansprüche 1 bis 12, **dadurch gekennzeichnet, dass** er Vorrichtungen zum Lesen und zur Übertragung eines digitalen Stimmbildes eines Benutzers, wie eines Anrufers, und Vorrichtungen (TA) zur Übertragung einer Stimmansage des Benutzers aufweist, die als Stimmbild (RV, SV) dieses Benutzers genutzt wird.

18. Telefonsystem mit zumindest einer Vermittlungseinrichtung (PABX-O) zur Steuerung der Anrufe zwischen den Telefonterminals (TA, TB), **dadurch gekennzeichnet, dass** es zumindest eine Einheit (U_{yo}) zur Verarbeitung von Telefonanrufen mit Vorrichtungen zur Stimmerkennung (RV) und eine Datenbasis (BD) aufweist, auf welcher Daten aufgezeichnet sind, die charakteristisch sind für Personen, die anrufen oder angerufen werden können, wobei die Daten zumindest eine erste biometrische Datenangabe enthalten, welche die Identifizierung des Anrufers ermöglicht, und zumindest eine zweite biometrische Datenangabe zur Verifikation dieser Identifizierung, wobei die eine der Datenangaben ein Stimmbild des Anrufers ist, wobei die Herstellung der Telefongespräche zwischen einem Anrufer und einem Angerufenen anhand der von dem Anrufer gemachten Stimmansage, seiner Identifizierung und der Identifizierung des Angerufenen geschieht, und dass die Identifizierung des Anrufers durch eine Verifikation (SV) des Stimmbildes im Gesprächsverlauf gesichert wird.

## Claims

1. Method of processing telephone calls between calling parties and called parties, according to which the establishment of a telephone communication comprises, for a calling party, the seizure of the line, then a voice announcement allowing the identification of the called party and an identification of the calling party based on at least one item of biometric data of the said calling party, **characterized in that** it comprises a verification of this identification based on at least one other item of biometric data, one of the items of data being the voice print, and **in that** the identification is secured, the security being provided by a verification of the voice print during the communications.

2. Method of processing telephone calls according to Claim 1, **characterized in that** the calling party is identified based on his voice print.

3. Method of processing telephone calls according to Claim 1 or 2, **characterized in that** a second item of biometric data of the calling party corresponds to his fingerprint.

4. Method of processing telephone calls according to any one of the preceding claims, **characterized in that** the identification comprises an authentication of the item or items of biometric data.

5. Method of processing telephone calls according to Claim 4, **characterized in that** the authentication of the item or items of biometric data comprises a verification of the match between the characteristics of a calling party and the characteristics previously recorded for the said calling party.

6. Method of processing telephone calls according to Claim 4 or 5, **characterized in that** the prior recording of the voice print comprises a learning process.

7. Method of processing telephone calls according to Claim 1, **characterized in that** the verifications are carried out randomly during communication.

8. Method of processing telephone calls according to Claim 1, **characterized in that** the security also comprises the request of a previously allocated confidential code and verification of this code, in the event of a mismatch of at least one characteristic.

9. Method of processing telephone calls according to any one of the preceding claims, **characterized in that** the voice announcement comprises a specific characteristic of the called party.

10. Method of processing telephone calls according to Claim 9, **characterized in that** the specific characteristic of the called party is his family name.

11. Method of processing telephone calls according to any one of the preceding claims, **characterized in that** the voice announcement comprises a specific characteristic of the calling individual.

12. Method of processing telephone calls according to Claim 11, **characterized in that** the specific characteristic of the calling individual is the family name of the individual.

13. Telephone interface (I) between a calling party and a telephone network (PSTN) comprising a module (PABX-O) for initiating the telephone call and identifying the called parties based on a voice announcement of a calling party and a module (U_{yo}) for processing items of biometric data of calling parties allowing the identification of the said calling parties based on an item of biometric data, and the establishment of the communications, **characterized in that** it comprises means (SV) of verifying the identification based on a second item of biometric data, one of the items of data being the voice print, and **in that** these means (SV) are capable of verifying the voice print during communication.

14. Interface according to Claim 13, **characterized in that** the module (U_{yo}) for processing items of biometric data of the calling parties comprises at least one unit (U_{yo}) for processing telephone calls comprising voice recognition means (VR) and a database (DB) on which are recorded items of data characteristic of the persons likely to call or be called, the said items of data containing at least a first item of biometric data allowing the identification of the said calling party and at least a second item of biometric data for the verification of this identification, the establishment of the telephone communications between a calling party and a called party being achieved based on the voice announcement issued by the calling party, his identification, and the identification of the called party.

15. Interface according to Claim 13, **characterized in that** the means (SV) for securing the identification carry out random verifications during communication.

16. Interface according to Claim 13, **characterized in that** the means (SV) for securing the identification comprise means for requesting a previously allocated confidential code to a calling party and for comparing the received code and the previously recorded code for the said calling party, in the event of a mismatch of at least one characteristic.

17. Telecommunications terminal (TA) comprising means for the implementation of all the steps of the method according to any one of Claims 1 to 12, **characterized in that** it comprises means of reading and transmitting a digital print of a user such as a calling party, and means (TA) for transmitting a voice announcement of the user, exploited as a voice print (VR, SV) of this user.

18. Telephone system comprising at least one automatic branch exchange (PABX-O) for controlling the calls between the telephone terminals (TA, TB), **characterized in that** it comprises at least one unit (U_{yo}) for processing telephone calls comprising voice recognition means (VR) and a database (DB) on which are recorded items of data characteristic of the persons likely to call or be called, the said items of data containing at least a first item of biometric data allowing the identification of the said calling party and at least a second item of biometric data for the verification of this identification, one of the items of data being a voice print of the calling party, the establishment of the telephone communications between a calling party and a called party being achieved based on the voice announcement issued by the calling party, his identification, and the identification of the called party and **in that** the identification of the called party is secured by a verification (SV) of the voice print during communication.
